# EUROPEAN PATENT APPLICATION

(11) **EP 3 108 851 A1**
(43) Date of publication of application: **28.12.2016**
(21) Application number: 15752345.7
(22) Date of filing: 28.01.2015
(51) Int. Cl.: A61C 13/10, A61C 13/007

(54) **ARTIFICIAL TOOTH**

(30) Priority: 18.02.2014 JP 2014028287
(71) Applicant: National University Corporation Tokyo Medical and Dental University, Bunkyo-ku Tokyo 113-8510 (JP); GC Corporation, Bunkyo-ku Tokyo 113-0033 (JP); GC Dental Products Corporation, Kasugai-shi, Aichi 486-0844 (JP)
(72) Inventor: MINAKUCHI, Shunsuke, Tokyo 113-8510 (JP); KANAZAWA, Manabu, Tokyo 113-8510 (JP); YAMAMOTO, Shinta, Tokyo 113-8510 (JP); MICHII, Takayuki, Tokyo 174-8585 (JP); KUMAGAI, Tomohiro, Tokyo 174-8585 (JP); MATSUURA, Daisuke, Kasugai-shi Aichi 486-0844 (JP)
(74) Representative: Müller-Boré & Partner Patentanwälte PartG mbB
(86) International application number: PCT/JP2015/052311
(87) International publication number: WO 2015/125573

(57) **Abstract**

An object is to provide an artificial tooth that can be attached to a denture base designed by CAD/CAM to be formed easily and accurately when the artificial tooth is arranged on the denture base.

In an artificial tooth (21) that has a shape corresponding to a denture base that is designed on CAD based on three-dimensional data and is cut out, a regulator (21a to 21h) that regulates the rotation on the axis of the tooth as the center is provided for a portion to touch the denture base, and the regulator has a shape so as not to engage with the denture base in the direction of the axis of the tooth.

## Description

### Technical Field

The present invention relates to an artificial tooth.

### Background Art

One of well-known methods for making a denture is a lost wax technique. A denture can be obtained with this technique including the following steps to go through: that is, first, an impression of a patient's intraoral shape is taken by using an impression material (so-called impression taking). Plaster is poured to the impression and solidified, to make a plaster cast.

Next, heights of denture of the upper and lower jaws are secured by using wax on the plaster cast, and artificial teeth are embedded in the wax, to be wax model dentures (so called arrangement of artificial teeth). Then, these wax model dentures are embedded in plaster or the like and the plaster or the like is solidified, and the wax is made to melt and flow away using hot water or the like upon forming a portion for the wax flowing out. Whereby, only the arranged artificial teeth remain, and a cavity is formed at the portion where the wax existed. Then, resin or the like is poured to (packed into) the cavity, to be cured. A denture can be obtained by breaking and removing the plaster.

As described above, the lost wax technique includes a lot of steps, and takes a long time to complete. In addition, it is said that a dental technician has to be skilled upon making dentures with this technique.

In contrast, Patent Literatures 1 and 2 disclose the art of making dental prostheses such as dentures using CAD/CAM. That is, information on design and manufacture of dental prostheses is treated using CAD/CAM as data. Finally, dental prostheses can be obtained by cutting out with an NC machine tool based on the data.

According to this, dental prostheses can be made with less steps than the lost wax technique for a shorter time than before.

### Citation List

### Patent Literature

- Patent Literature 1:: JP H9-206320A
- Patent Literature 2:: JP 2002-224143A

### Summary of Invention

### Technical Problem

However, when dentures are made using CAD/CAM, it is necessary that: a denture base is cut out from a harder resin material than wax to be made, and artificial teeth made from ceramics, resin, or the like are fit into a recess that was shaped in advance on the hard denture base for fitting artificial teeth thereinto, to be arranged, and are fixed with an adhesive. Doing so, some artificial teeth, especially those which have shapes whose cross-sections are approximately circles like molars, wiggle and rotate because the recess for fitting artificial teeth has to be shaped larger than the artificial teeth. Occurrence of rotation or movement of an artificial tooth upon adhesion of the artificial tooth might cause the entire occlusal relationship designed by CAD to lose its accuracy because a position of the artificial tooth that touches the opposite tooth changes. As described above, an artificial tooth has to be positioned not only horizontally but also rotationally. Thus, technique of attaching an artificial tooth easily and accurately is necessary.

An object of the present invention is to provide an artificial tooth that can be attached to a denture base designed by CAD/CAM to be formed easily and accurately when the artificial tooth is arranged on the denture base.

### Solution to Problem

The present invention will be described below. Here, reference signs attached to the drawings are described together in parentheses for easy understanding. However, the present invention is not limited thereto.

The present invention is an artificial tooth (21) that has a shape corresponding to a denture base, the denture base being designed on CAD based on three-dimensional data and being cut out, wherein a regulator (21 a to 21 h) that regulates rotation of the artificial tooth on an axis of the artificial tooth as a center is provided for a portion of the artificial tooth to touch the denture base, and the regulator has a shape so as not to engage with the denture base in a direction of the axis of the artificial tooth.
Here, "an axis of the artificial tooth" means a long axis of the artificial tooth.

The regulator (21 a to 21 h) of the artificial tooth may include at least one of a protrusion and a recess.

### Advantageous Effects of Invention

According to the present invention, an artificial tooth that is to be attached to a denture base designed by CAD/CAM to be formed is prevented from rotating, and can be attached to the denture base easily and accurately.

### Brief Description of Drawings

FIG. 1 shows an exterior of a denture 10.
FIG. 2 shows an exterior of a denture base 11.
FIG. 3 shows an exterior of an artificial tooth 21.
FIG. 4(a) shows one scene where the artificial tooth 21 is being attached to the denture base 11, and FIG. 4(b) shows one scene where the artificial tooth 21 has been attached to the denture base 11.
FIG. 5(a) shows regulators 13a and 21 a that regulate rotation, FIG. 5(b) shows regulators 13b and 21b that regulate rotation, and FIG. 5(c) shows regulators 13c and 21 c that regulate rotation.
FIG. 6(a) shows regulators 13d and 21d that regulate rotation, and FIG. 6(b) shows regulators 13e and 21 e that regulate rotation.
FIG. 7(a) shows regulators 13f and 21f that regulate rotation, FIG. 7(b) shows regulators 13g and 21g that regulate rotation, and FIG. 7(c) shows regulators 13h and 21 h that regulate rotation.
FIG. 8 is a block diagram that conceptually shows a design apparatus 30.
FIG. 9 shows a flow of a method S1 for making a denture.
FIG. 10 shows a flow of a step S20 of designing the denture.
FIG. 11 shows a flow of a step S30 of making the denture.

### Description of Embodiments

The above described operation and advantage of the present invention are made clear by the embodiments described as follows. The present invention will be described below based on the embodiments shown in the drawings. However, the present invention is not limited to these embodiments.

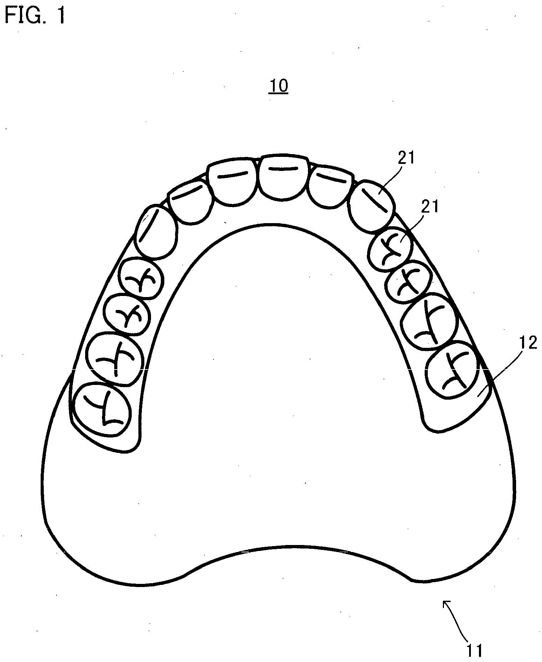

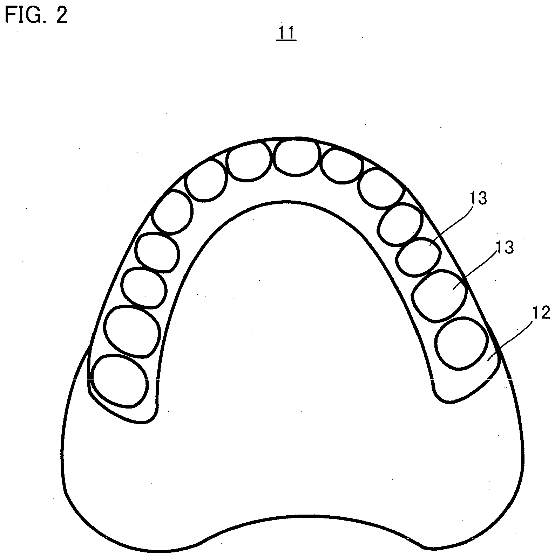

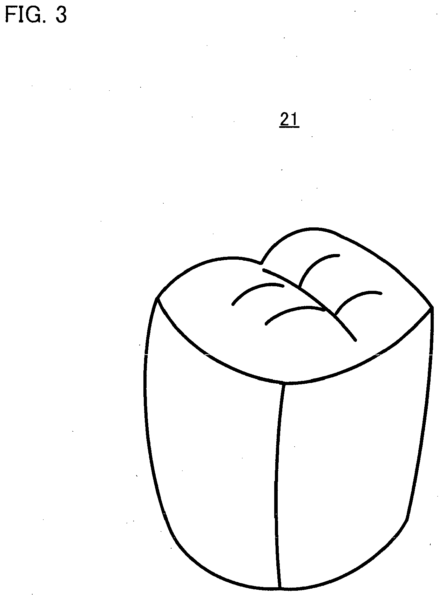

FIG. 1 is a view to explain one embodiment, and shows the exterior of a denture 10 including artificial teeth 21. Such a denture 10 is arranged in the lower jaw side and/or upper jaw side in the patient's oral cavity, and artificially compensates natural teeth, which have been lost. As is seen from FIG. 1, the denture 10 is structured to have a denture base 11 and a plurality of the artificial teeth 21. FIG. 2 shows the exterior of the denture base 11 and FIG. 3 shows the exterior of an artificial tooth 21 according to one example.
While a denture that compensates whole of one jaw side is described as an example of the denture 10 in this embodiment, the denture 10 may be a partial denture that compensates some of natural teeth, which have been lost.

The denture base 11 is a member that has functions of holding the artificial tooth 21 at a predetermined position, and stably attaching the denture itself onto an oral mucosa. In this embodiment, as is seen from FIG. 2, the denture base 11 includes a ridge part 12 that rises like a ridge as a portion where the artificial tooth 21 is arranged, and is provided with recess parts 13 on the top part of the ridge part 12 where one end of each artificial teeth 21 is inserted, to fix the artificial teeth 21.

The artificial tooth 21 is an artificial tooth made so as to have the function of a natural tooth that has been lost, instead of the natural tooth. The artificial tooth 21 is held by inserting one of its end into the above described recess part 13 of the denture base 11 and fixing it with an adhesive. Whereby, a plurality of the artificial teeth 21 are arranged arcuately like a row of teeth, and can function as natural teeth.

Here, known materials used for artificial teeth can be employed for the artificial tooth 21. Examples thereof include ceramics, resin, hard resin and metal.

Known materials can be used as materials with which the artificial tooth 21 adhere to the denture base 11. Examples thereof include self-curing resin, resin of gingival color, resin for denture bases, known industrial adhesives such as an epoxy adhesive, and any combination of at least two thereof.

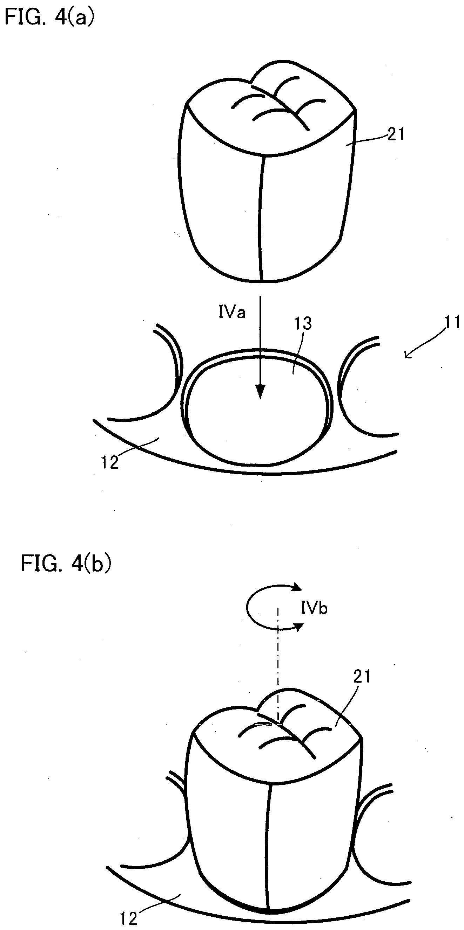

The artificial tooth 21 described above is attached to the recess part 13 of the denture base 11 as follows. FIG. 4(a) is a perspective view typically showing the state-just before one artificial tooth 21 is attached to the recess part 13 of the denture base 11, and FIG. 4(b) is a perspective view typically showing the state where the artificial tooth 21 has been attached. As is seen from them, one end surface of the artificial tooth 21 is positioned so as to face the bottom surface of the recess part 13 of the denture base 11 as shown in FIG. 4(a), and the artificial tooth 21 is moved in the direction indicated by the arrow IVa (the direction of inserting the artificial tooth 21. For example, the direction of the axis of the tooth (the direction along the axis of the tooth)), to match the end surface of the artificial tooth 21 to the bottom surface of the recess part 13; thereby the artificial tooth 21 is attached as sticking out of the denture base 11, as shown in FIG. 4(b). At this time, as described above, the adhesive is arranged between the end surface of the artificial tooth 21 and the bottom surface of the recess part 13, to fix the artificial tooth 21.

Here, the shape of the outer circumference of the recess part 13 is preferably approximately same as or slightly larger than that of an inserted portion of the artificial tooth 21 under the state where the end part of the artificial tooth 21 is inserted inside the recess part 13. Thereby, the artificial tooth 21 is positioned concerning the direction along the bottom surface of the recess part 13 in the state where the artificial tooth 21 is attached to the recess part 13.
The shapes of the recess part 13 and the portion of the artificial tooth 21 inserted into the recess part 13 are preferably such as not to engage with each other (for example, the shapes such that they are not caught in each other) in the direction of the insertion (for example, the direction along the axis of the tooth (the direction of the axis of the tooth)). Thereby, they have such a relationship that no elastic deformation or plastic deformation is required thereof upon the insertion. This is because engagement by so-called forced insertion with, for example, an undercut provided is not suitable since the denture base 11 is formed by a hard material such as hard resin, metal and a ceramic sintered body as described above.

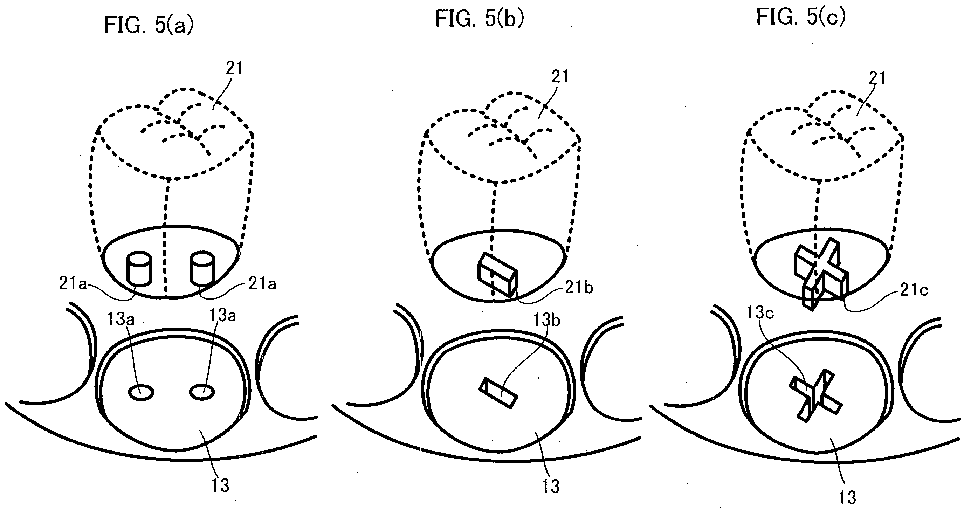

On the other hand, in this case, it is also necessary to regulate rotation of the artificial tooth 21 on the center (axis) that is in the direction along the direction where the artificial tooth 21 protrudes (the direction of the axis of the artificial tooth 21) as shown by the arrow IVb in FIG. 4(b). Without this regulation, it cannot be exactly said to strongly restrict the artificial tooth 21 in the rotation direction, and the artificial tooth 21 might rotate upon the attachment.
Thus, regulators that regulate rotation of the artificial tooth 21 are provided for the artificial tooth 21 and the recess part 13 of the denture base 11. Specific embodiments of the regulators that regulate the rotation are not especially limited. For example, a protrusion or hole is provided for the artificial tooth 21 and a recess or protrusion corresponding to the protrusion or hole for the artificial tooth 21 is provided for the recess part 13 of the denture base 11. FIGS. 5 to 7 show concrete examples.

FIG. 5(a) shows an example of disposing two columnar protrusions 21a on the surface of the artificial tooth 21 which faces the bottom surface of the recess part 13, and providing recesses 13a for the bottom surface of the recess part 13 which have shapes corresponding to the protrusions 21 a, at places corresponding to the protrusions 21a.

FIG. 5(b) shows an example of disposing one prismatic protrusion 21b on the surface of the artificial tooth 21 which faces the bottom surface of the recess part 13, and providing a recess 13b for the bottom surface of the recess part 13 which has a shape corresponding to the protrusion 21b, at a place corresponding to the protrusion 21b.
FIG. 5(c) shows an example of disposing one cross-shaped protrusion 21c on the surface of the artificial tooth 21 which faces the bottom surface of the recess part 13, and providing a recess 13c for the bottom surface of the recess part 13 which has a shape corresponding to the protrusion 21c, at a place corresponding to the protrusion 21c.
The rotation can be regulated as well by inserting the corresponding protrusion(s) 21a, 21b or 21c into the recess(es) 13a, 13b or 13c upon inserting the artificial tooth 21 into the recess part 13 to arrange the artificial tooth 21.
Here, examples of providing (a) protrusion(s) for the artificial tooth 21 and (a) recess(es) corresponding to the protrusion(s) for the bottom surface of the recess part 13 are shown. On the contrary, a recess may be provided for the artificial tooth 21 side and a protrusion corresponding to the recess may be provided for the bottom surface of the recess part 13.

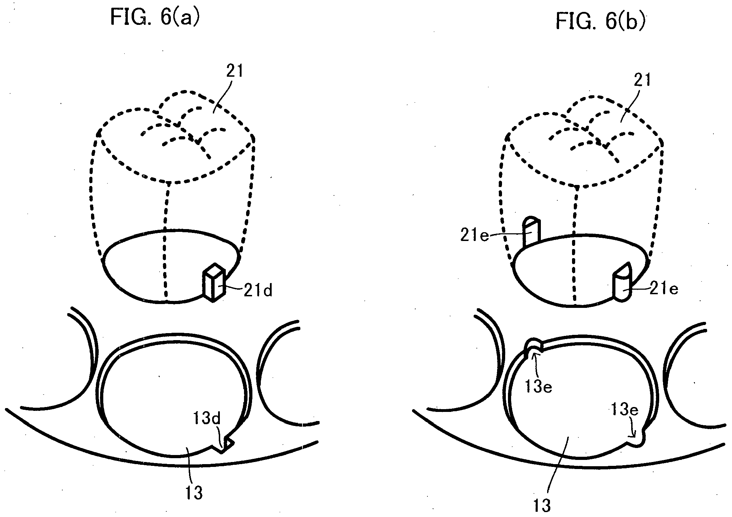

FIG. 6(a) shows an example of disposing one prismatic protrusion 21d on a surface of the artificial tooth 21 which faces the side surface of the recess part 13, and providing a recess 13d for the side surface of the recess part 13 which has a shape corresponding to the protrusion 21d, at a place corresponding to the protrusion 21d.

FIG. 6(b) shows an example of disposing two semicircular columnar protrusions 21 e on a surface of the artificial tooth 21 which faces the side surface of the recess part 13, and providing recesses 13e for the side surface of the recess part 13 which have shapes corresponding to the protrusions 21 e, at places corresponding to the protrusions 21e.

Here, examples of providing (a) protrusion(s) for a side surface of the artificial tooth 21 and (a) recess(es) corresponding to the protrusion(s) for the side surface of the recess part 13 are shown. On the contrary, a recess may be provided for the artificial tooth 21 side and a protrusion corresponding to the recess may be provided for the side surface of the recess part 13.

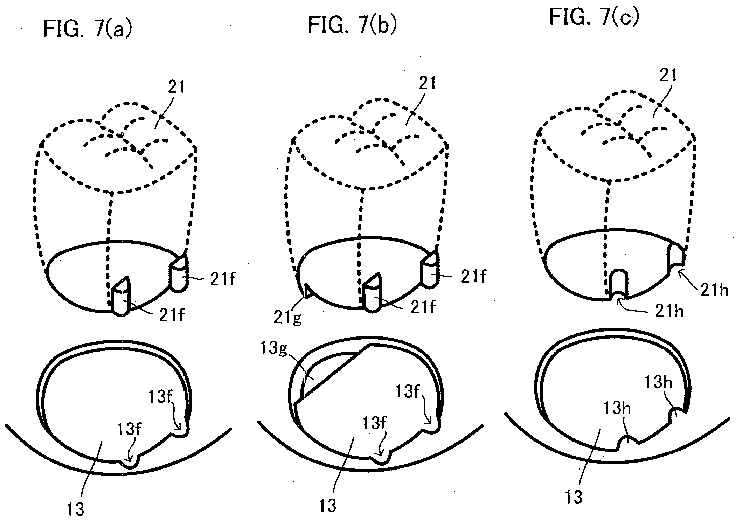

FIG 7(a) shows an example of disposing two protrusions 21f at a predetermined interval on a surface of the artificial tooth 21 which faces the side surface of the recess part 13, and providing recesses 13f for the side surface of the recess part 13 which have shapes corresponding to the protrusions 21f, at places corresponding to the protrusions 21f.

FIG. 7(b) shows an example of disposing a protrusion 21g on the surface of the artificial tooth 21 which faces the bottom surface of the recess part 13 in addition to the protrusions 21f of FIG. 7(a), and providing the recesses 13f for the side surface of the recess part 13 as described above and also a recess part 13g which has a shape corresponding to the protrusion 21 g, at a place corresponding to the protrusion 21g.

FIG. 7(c) shows an example of disposing two recess parts 21 h at a predetermined interval on the surface of the artificial tooth 21 which faces the side surface of the recess part 13, and providing protrusions 13h for the side surface of the recess part 13 which have shapes corresponding to the recess parts 21h, at places corresponding to the recess parts 21h.

Here, as to the regulators that regulate the rotation as well, the shapes of the protrusions and the recesses are such as not to engage with each other (for example, the shapes such that they are not caught in each other) in the direction of inserting the protrusions into the recesses (for example, the direction of the axis of the tooth). The insertion can be carried out without elastic deformation or plastic deformation on the protrusions and the recesses.

Using the artificial tooth as described above makes it possible to arrange the artificial tooth more accurately and more properly on the denture that can be made faster and easier than before by employing CAD/CAM thereto. Described below will be a method for making the denture including the artificial tooth of the above described embodiment.

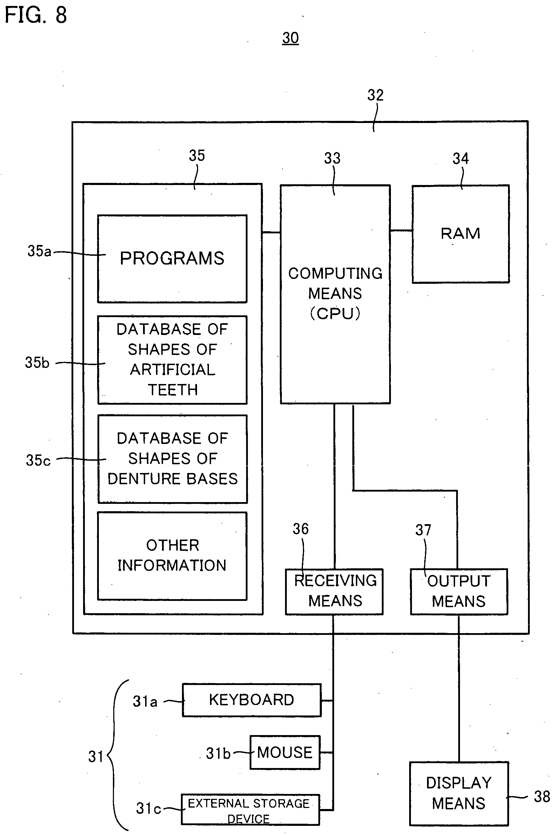

FIG. 8 is a block diagram conceptually showing the structure included in a design apparatus 30 for the denture according to one embodiment. The design apparatus 30 for the denture (hereinafter may be referred to as "design apparatus 30") includes input means 31, an arithmetic unit 32 and display means 38. The arithmetic unit 32 includes computing means 33, a RAM 34, memory means 35, receiving means 36 and output means 37. The input means 31 includes a keyboard 31a, a mouse 31b and an external storage device 31c that operates as one of storage media.

The computing means 33 is configured by a so-called CPU (central processing unit). The computing means 33 is means that is connected to and can control the above described components. The computing means 33 also executes various programs 35a stored in the memory means 35 or the like that operates as a storage medium, and carries out computation based on this execution as means for generating various kinds of data and selecting data, which will be described later.

The RAM 34 is a component that operates as a working area for the computing means 33 and memory means for temporary data. The RAM 34 can be configured by a SRAM, a DRAM, a flash memory etc., and is the same as a known RAM.

The memory means 35 is a component that operates as a storage medium in which programs and data that are the bases of various kinds of computation are stored. Various intermediate and final results obtained by the execution of programs may be stored in the memory means 35. More specifically, the programs 35a, a database of shapes of artificial teeth 35b and a database of shapes of denture bases 35c are stored (archived) in the memory means 35. Other pieces of information may be archived therein together.

The programs 35a are programs necessary for operating the design apparatus 30, and are not especially limited.

The database of shapes of artificial teeth 35b is a database in which information on shapes concerning artificial teeth etc. are stored. While types of shapes of artificial teeth stored in the database are not especially limited, such a mode may be one type that a plurality of artificial teeth included in a dental arch are regarded as one group, and the state where upper and lower dental arches occlude is stored as data. This data may be configured so as to be treated by artificial tooth, and in addition by divided unit including some artificial teeth.
Preferably, plural variations of such groups of artificial teeth are prepared in order to match patients' characteristics including "sexes", "physiques" and so on.
The above described embodiments of the regulators that regulate the rotation are also stored in the database of shapes of artificial teeth 35b.

The database of shapes of denture bases 35c is a database in which information on shapes concerning denture bases etc. are stored. Types of data concerning denture bases stored in the database are not especially limited. For example, data on such a state may be stored that a pair of "only the upper halves each including a portion where an artificial tooth is to be attached" is arranged with the positional relationship on the data of occluding artificial teeth (for example, a space of 0.1 mm to 0.5 mm for the adhesion, or the like).
Preferably, the data includes pairs of three or four variations of sizes which match sizes of artificial teeth.
The embodiments of the regulators that regulate the rotation are also stored in the database of shapes of denture bases 35c.

The receiving means 36 is a component that has a function of properly taking external information in the arithmetic unit 32, and the input means 31 is connected thereto. The receiving means 36 includes a so-called input port, input connector, etc.

The output means 37 is a component that has a function of properly outputting to the outside, information to be outputted to the outside out of obtained results. The display means 38 such as a monitor, and various devices are connected thereto. The output means 37 includes a so-called output port, output connector, etc.

The input means 31 includes, for example, the keyboard 31 a, the mouse 31 b, the external storage device 31 c, etc. Known ones can be employed for the keyboard 31a and the mouse 31 b, and the description thereof is omitted.
The external storage device 31c is known externally-connectable storage means, and also operates as a storage medium. Necessary various programs and data can be stored therein without any limitation. For example, the same program and data stored in the memory means 35 as described above may be stored therein. Data on an impression, occlusion, etc. which is the basis when the arithmetic unit 32 generates data may be stored in the external storage device 31 c.
A known device can be employed as the external storage device 31c. Examples thereof include a CD-ROM and a CD-ROM drive, a DVD and a DVD drive, a hard disk, and various kinds of memories.

In addition, information may be provided for the arithmetic unit 32 by network or communication via the receiving means 36. As well, information may be sent to an external device (for example, an NC machine tool) by network or communication via the output means 37.

Such a design apparatus 30 makes it possible to directly cutting out a denture base, to make a denture without going through complex steps as included in the lost wax technique.

Next, a method S1 for making the denture 10 with the design apparatus 30 (may be referred to as "making method S1") will be described. While an example using the design apparatus 30 will be described here for understandability, the making method is not limited thereto, and can be carried out with another apparatus only if this apparatus can realize the method, which includes the following points.

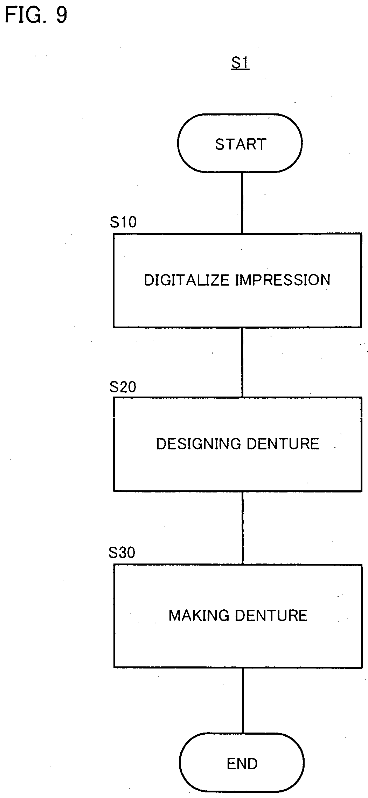

FIG. 9 shows a flow of the making method S1. As is seen from this, the making method S1 includes a step S10 of digitalizing an impression, a step S20 of designing the denture, and a step S30 of making the denture. Hereinafter these steps will be described.

The step S10 is a step of obtaining CAD data of data on shapes and on occlusion from an obtained impression. The impression itself is taken with a known method. From this, information on a surface of a patient's mucosa of a plaster cast or the like can be obtained.

A method of obtaining CAD data can be carried out with a known apparatus. Examples thereof include a three-dimensional optical scanner.
In contrast, data on occlusion can be obtained by three-dimensional metrology on combination of an impression of an upper jaw and an impression of a lower jaw like the state of patient's occlusion.

The step S20 is a step of finally determining the shape of the denture 10 on the data depending on the information on a surface of a patient's mucosa obtained in the step S10, and the databases stored in the design apparatus 30. Further, in the step S20, the data on artificial teeth is deleted from the data of dentures on which the arrangement is completed, and processing data for cutting a denture base is outputted to the step S30 for making the denture (a machine tool). Each computing carried out in the step S20 in this embodiment is executed in the design apparatus 30. That is, the computing is progressed by the computing means 33 according to the programs 35a stored in the memory device 35 included in the design apparatus 30.

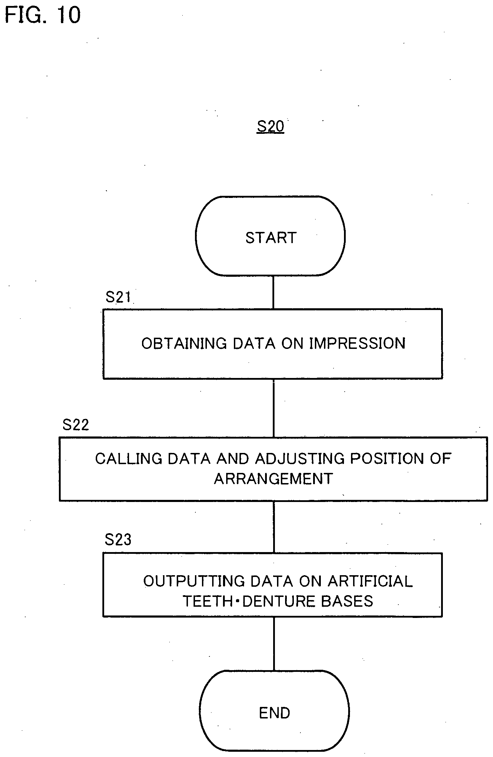

FIG. 10 shows a flow of the step S20. As is seen from this, the step S20 includes a step S21 of obtaining the data on an impression, a step S22 of calling data and adjusting a position of the arrangement, and a step S23 of outputting the data on artificial teeth and denture bases.

The step S21 is a step of obtaining the information on an impression, which was digitalized in the step S10, and taking the information in the design apparatus 30. This taking is stored in the memory device 35 via the receiving means 36 of the design apparatus 30.

The step S22 is a step of calling information from the databases and arranging artificial teeth on the design apparatus 30. That is, based on the taken information so far, data on artificial teeth that matches a dental arch is called from the databases stored in the memory means 35 of the design apparatus 30. This is roughly arranged at a position on an alveolar ridge, and then, its position is finely adjusted.

The step S23 is a step of individually extracting the data on shapes of artificial teeth and the data on a shape of a denture base from the shape determined in the Step S22, and outputting the extracted data to the machine tool used in the step S30 as command data. This output can be carried out via the output means 37 of the design apparatus 30.

Returning to FIG. 9, the step S30 will be described. The step S30 is a step of receiving the processing data for the denture outputted in the Step S20, cutting out the shape with the machine tool, and combining all the shapes to finish the denture 10.

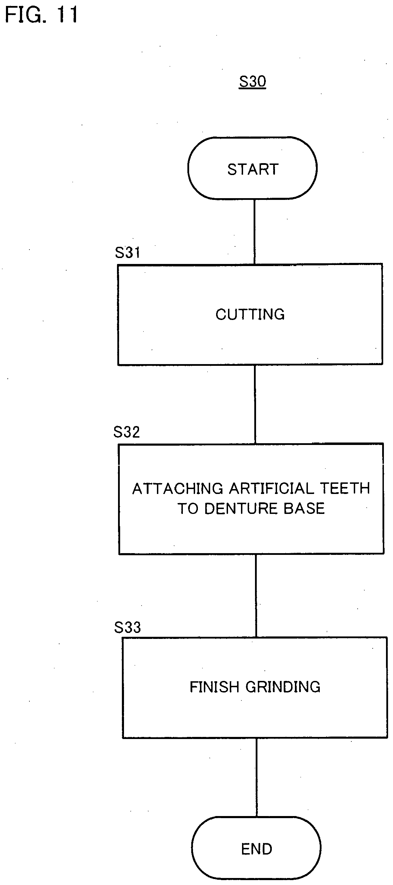

FIG. 11 shows a flow of the step S30. As is seen from FIG. 11, the step S30 includes a step S31 of cutting, a step S32 of attaching artificial teeth to the denture base, and a step S33 of finish grinding.

The step S31 is a step of receiving the command data to the machine tool, which was outputted in the step S23, and based on this, cutting out the denture base with the machine tool by cutting. Here, a known machine tool can be used and is not especially limited. A known NC machine tool can be used. A material of the denture base used here is constituted by a hard material such as hard resin, metal and ceramics. Thus, the cutting can be carried out properly and accurately.

The step S32 is a step of attaching artificial teeth to the denture base obtained in the step S31. This step is: as described above with reference to FIG. 4, on end surface of the artificial tooth 21 is fixed so as to superpose the bottom surface of the recess part 13 of the denture base 11. Here, since the regulators that regulate the rotation (for example, FIGS. 5(a) to 5(c)) are provided for the artificial tooth and denture base, the rotation is regulated and the artificial tooth can be properly attached. At this time, since the insertion can be carried out without any deformation on either the artificial tooth or the denture base, the attachment can be carried out easily without forced fitting or the like.
An adhesive is supplied by application or the like between the end surface of the artificial tooth 21 and the bottom surface of the recess part 13, which are arranged so as to face each other, to fix them.

The step S33 is a step of carrying out finish grinding on the denture obtained in the step S32, to finally obtain the denture 10.

As described above, according to the making method S1, the denture 10 with a high accuracy can be obtained without any effort or time like the lost wax technique. Since the denture base 11 is formed by a hard material such as hard resin, metal and a ceramic sintered body, for example, engagement by so-called forced insertion with an undercut provided is not suitable in this method. Thus, the rotation shown in FIG. 4(b) might be a problem when the artificial tooth is attached to the denture base. In this embodiment, the regulators that regulate the rotation is provided, and thus, this problem can be solved.

### Reference Signs List

- 10: denture
- 11: denture base
- 12: ridge part
- 13: recess part
- 21: artificial tooth

## Claims

1. An artificial tooth that has a shape corresponding to a denture base, the denture base being designed on CAD based on three-dimensional data and being cut out, wherein
a regulator that regulates rotation of the artificial tooth on an axis of the artificial tooth as a center is provided for a portion of the artificial tooth to touch the denture base, and
the regulator has a shape so as not to engage with the denture base in a direction of the axis of the artificial tooth.

2. The artificial tooth according to claim 1, wherein the regulator includes at least one of a protrusion and a recess.
